(19) Europäisches Patentamt
European Patent Office
Office européen des brevets

(11) Veröffentlichungsnummer: **0 469 237 A1**

(12) **EUROPÄISCHE PATENTANMELDUNG**

(21) Anmeldenummer: **91105677.8**

(22) Anmeldetag: **10.04.91**

(51) Int. Cl.5: **F01N 3/02**, B01J 19/12

(30) Priorität: **03.08.90 DE 4024626**

(43) Veröffentlichungstag der Anmeldung:
**05.02.92 Patentblatt 92/06**

(84) Benannte Vertragsstaaten:
**CH DE FR GB IT LI SE**

(71) Anmelder: **STROMERZEUGUNG GmbH & CO.
ANLAGENBAU KG
Augsburger Strasse 704
W-7000 Stuttgart 61(DE)**

(72) Erfinder: **Friesen, Ulrich T.
Schönbergstrasse 23
W-7302 Ostfildern 4(DE)**

(74) Vertreter: **Niemeyer, Hans, Dipl.-Ing.
Martin-Schongauer-weg 6
W-7024 Filderstadt 4(DE)**

(54) **Verfahren und Vorrichtung zum Umwandeln von Molekülen in einer Fluidströmung.**

(57) Die Erfindung betrifft ein Verfahren und eine Vorrichtung zum Umwandeln von in einem strömenden Fluid transportierten Molekülen und Molekülverbänden. Gemäß der Erfindung wird die für das Aufbrechen von Molekülbindungen erforderliche Energie mit Hilfe eines elektromagnetischen Feldes, insbesondere eines Mikrowellenfeldes (20), zugeführt, und Verfahren und Vorrichtung gemäß der Erfindung eignen sich besonders zur Verbrennung von Rußpartikeln, die von einem Abgasstrom (12) transportiert werden, welcher vorzugsweise durch ein keramisches Filter (16) geleitet wird.

EP 0 469 237 A1

Die Erfindung betrifft ein Verfahren zum Umwandeln von von einem, insbesondere gasförmigen, strömenden Fluid transportierten Einzelmolekülen und Molekülverbänden.

Seit einiger Zeit werden im Hinblick auf die Umweltschäden, welche ihre Ursache in Schadstoffen haben, die mit den Abgasen von Brennkraftmaschinen, Kraftwerken, Müllverbrennungsanlagen und dergleichen in die Atmosphäre gelangen, zunehmend stärkere Bemühungen unternommen, die Schadstoffemissionen so weit wie möglich zu reduzieren, um die Gefährdung von Menschen, Tieren und Pflanzen in erträglichen Grenzen zu halten.

Ein wichtiges Beispiel für die Reduzierung von Schadstoffemissionen besteht in der katalytischen oder mechanischen Abgasreinigung bei Kraftfahrzeugen. In bekannten Abgasreinigungsvorrichtungen für Dieselmotoren werden häufig keramische Abgasfilterkörper eingesetzt, wobei das Keramikmaterial mit einer katalytisch wirksamen Beschichtung versehen sein kann bzw. mit einer speziellen Beschichtung, durch die die Verbrennungstemperatur von Rußpartikeln, welche von der beschichteten Oberfläche eingefangen werden, herabgesetzt wird.

In vielen Fällen sind die keramischen Abgasfilterkörper sogenannte Pellets, die in einem durchlässigen Gehäuse im Inneren eines geschlossenen Gehäuses angeordnet sind, welches einen Gaseinlaß zur Verbindung mit dem Abgasstutzen des Dieselmotors und einen Gasauslaß für das gereinigte Abgas aufweist. Bei der Verwendung derartiger katalytischer Abgasreinigungsvorrichtungen entsteht im Betrieb ein Abrieb an den Pellets, und es ergeben sich Probleme bei der Reinigung bzw. Regenerierung. Bei einer Abgasreinigungsvorrichtung mit Filterkörpern in Form von sogenannten Pellets müssen letztere nämlich aus ihrem Gehäuse entnommen und in einem Ofen erhitzt werden, um Rußpartikel bzw. Ölrückstände abzubrennen und die Pellets zu regenerieren, welche dann wieder in das Gehäuse eingefüllt werden können. Bei anderen bekannten Abgasreinigungsvorrichtungen werden Filterkörper mit einer Wabenstruktur bzw. keramische Filterkörper in Form eines Wabenelements verwendet. Das Wabenelement bzw. die Wabenstruktur besteht dabei aus einem porösen Keramikfilter und umfaßt mehrere Zellen, die sich in Längsrichtung des Wabenelements erstrecken.

Dabei ist jeweils eines der einander gegenüberliegenden Enden jeder Zelle mittels eines Stopfens verschlossen. Folglich liegen im Betrieb einige geschlossene Enden weiter stromaufwärts und andere weiter stromabwärts. Das Abgas strömt nun zunächst in die Zellen, die am stromabwärts gelegenen Ende verschlossen sind, durchdringt dann die porösen Trennwände und fließt aus benachbarten Zellen ab, welche am stromabwärts gelegenen Ende offen sind. Auf diese Weise können die porösen Zwischenwände als feine Filter im Abgasstrom verwendet werden, deren Öffnungen jedoch allmählich mit Rußpartikeln aus dem Abgasstrom verstopft werden.

Der verstopfte Filterkörper wird üblicherweise durch Abbrennen mit einem Brenner oder in einem elektrischen Ofen regeneriert. Wenn diese Regenerierung nicht rechtzeitig oder vollständig erfolgt, können sich Betriebsstörungen für die gesamte Anlage ergeben. Außerdem besteht beim Einsatz keramischer Filterkörper mit Wabenstruktur die Gefahr, daß diese Filterkörper, wenn der angeschlossene Motor mit hoher Leistung arbeitet, so stark erhitzt werden, daß zuvor angesammelte Rußpartikel, insbesondere wegen darin enthaltener Öl- bzw. Kraftstoffreste, spontan zu verbrennen beginnen, wobei der Verbrennungsvorgang je nach dem, wie "fett" der Ruß ist und wie groß die im Filter bereits abgelagerte Rußmenge ist, in unkontrollierter Weise derart hohe Temperaturen zur Folge haben kann, daß der keramische Filterkörper schmilzt oder daß zumindest die normalerweise vorhandene Beschichtung zerstört oder schwer beschädigt wird. Zusammenfassend läßt sich hinsichtlich des Standes der Technik bei der Abgasreinigung von Dieselmotoren folgendes feststellen:

1. Bei Filterkörpern in Form von Pellets gestaltet sich die Aufarbeitung insofern als schwierig, als die Pellets umgefüllt werden müssen und bei einer relativ hohen Temperatur von beispielsweise 700°C regeneriert werden müssen, wobei häufig Sintereffekte auftreten, die zu einer bleibenden Verschlechterung des häufig mit einer katalytischen Beschichtung versehenen Filtermaterials führen.

2. Bei Wabenelementen in Form keramischer Filterkörper wird im Bereich des einlaßseitigen Endes häufig eine große Menge von Rußpartikeln abgeschieden, und das Abbrennen der Rückstände in den porösen Zwischenwände bereitet Probleme, so daß die Regenerierung dieses Filter- bzw. Katalysatortyps ebenfalls problematisch ist. Außerdem kann es zu einem "spontanen" Verbrennen der Rußablagerungen mit unkontrolliert hohen Temperaturen und schweren Schäden für den Filterkörper kommen.

Bei der katalytischen Reinigung der Abgase von Benzinmotoren werden ähnliche Keramikfilter eingesetzt, wobei durch die katalytische Beschichtung des keramischen Filtermaterials mit Platin oder anderen katalytisch aktiven Stoffen die Reaktionstemperatur unerwünschter Abgaskomponenten herabgesetzt und deren Umwandlung in unschädliche Verbindungen angestrebt wird.

Bei der Reinigung der Abgase von Kraftwerken, Müllverbrennungsanlagen und dergleichen werden ebenfalls Abgasreinigungsvorrichtungen eingesetzt, die mechanische und/oder elektrische Filtereinrichtungen umfassen, wobei die störenden Abgasbestandteile, insbesondere Schwermetalle, teilweise an die Staubpartikel gebunden und mit diesen ausgefiltert werden, während andere Komponenten, wie z.B. Schwefeloxide, in geeigneten Waschlösungen, wo neue Verbindungen, wie z.B. Gips, entstehen, ausgefiltert oder durch Nachverbrennung bei teilweise sehr hohen Temperaturen zu unschädlichen Bestandteilen zersetzt werden. Dabei hat es sich gezeigt, daß alle bisher angewandten Abgasreinigungsverfahren trotz teilweise erheblichem Aufwand letztlich nicht voll befriedigen können.

Ausgehend vom Stand der Technik und der vorstehend aufgezeigten Problematik, liegt der Erfindung die Aufgabe zugrunde, ein verbessertes Verfahren bzw. eine verbesserte Vorrichtung zum Umwandeln von strahlungsabsorbierenden Einzelmolekülen und Molekülverbänden in einem strömenden Fluid, insbesondere in einer Abgasströmung, anzugeben.

Diese Aufgabe wird gemäß der Erfindung dadurch gelöst, daß die Molekülbindungen der Einzelmoleküle und Molekülverbände zumindest teilweise mittels eines elektromagnetischen Feldes, insbesondere eines Mikrowellenfeldes, durch Anregen von Schwingungen in den Molekülen aufgebrochen werden.

Die Erfindung basiert auf der Erkenntnis, daß die Moleküle einer Vielzahl von Verbindungen durch elektromagnetische Wellen entsprechender Frequenz und Energiedichte zu intensiven Schwingungen angeregt werden können, die letztlich bewirken, daß die Einzelmoleküle in einzelne Atome oder Atomgruppen zerlegt werden oder daß sich einzelne Moleküle aus größeren Molekülverbänden, wie z.B. Polymerketten oder kristallinen Strukturen, lösen. Durch die Anregung von Schwingungen einzelner Moleküle oder Molekülverbände gelingt dabei einer Änderung der chemischen und/oder physikalischen Struktur der zunächst in dem strömenden Fluid enthaltenen Einzelmoleküle und/oder Molekülverbände. Dieses Phänomen soll gemäß der Erfindung primär zur Reinigung von Abgasen eingesetzt werden, wobei durch das Einstrahlen elektromagnetischer Energie in den Abgasstrom ein Abbau schädlicher Abgaskomponenten angestrebt wird, was teilweise durch das Aufspalten gewisser chemischer Verbindungen in unschädliche Bestandteile geschieht und teilweise durch die Aktivierung störender Abgasbestandteile zur Bildung neuer unschädlicher Substanzen, wobei als Sekundäreffekt die Temperaturerhöhung im Abgasstrom aufgrund der durch die elektromagnetischen Wellen unmittelbar ausgelösten Effekte ergänzend die Zersetzung, Nachverbrennung oder sonstige Umwandlung störender Komponenten bei einer hohen, auf andere Weise nur schwer zu erreichenden Temperatur genutzt wird.

Eine weitere, wichtige Einsatzmöglichkeit für das erfindungsgemäße Verfahren besteht ferner darin, gewisse Ausgangsprodukte für einen chemischen Prozeß durch die Einwirkung elektromagnetischer Strahlung in die für einen nachfolgenden Verfahrensschritt geeignete Form zu bringen, wobei die für die Weiterverarbeitung "aufzuschließenden" Produkte selbst das strömende Fluid bilden können oder diesem vor dessen Eintreten in das elektromagnetische Feld zugesetzt werden können. Dem strömenden Fluid können dabei gleichzeitig Stoffe zugesetzt werden, die einen geeigneten Reaktionspartner für die Bestandteile der aufgebrochenen Moleküle bzw. Molekülverbände bilden. Weiterhin besteht in Ausgestaltung der Erfindung die Möglichkeit, dem strömenden Fluid dann, wenn es derartige Bestandteile nicht von vornherein enthält, strahlungsabsorbierende Einzelmoleküle bzw. Molekülverbände mit dem Ziel zuzusetzen, durch deren Aufbrechen im elektromagnetischen Feld eine so hohe Temperatur des strömenden Fluids zu erreichen, daß in diesem thermische Reaktionen ablaufen.

In Ausgestaltung der Erfindung hat es sich ferner als vorteilhaft erwiesen, wenn der Fluidstrom durch hochtemperaturfeste Filtereinrichtungen geleitet wird, an denen größere Molekülverbände mechanisch aus dem strömenden Fluid ausgefiltert und dann im Filterbereich für eine längere Verweilzeit dem elektromagnetischen Feld ausgesetzt werden, bis die betreffenden Molekülverbände bzw. Partikel unter der Einwirkung des elektromagnetischen Feldes und/oder der im Filterbereich vorhandenen Temperatur soweit zersetzt und/oder umgewandelt werden, daß ihre Reste das Filter passieren und dann stromabwärts von dem Filter vorzugsweise noch weiter aufgebrochen bzw. zur Bildung neuer Strukturen veranlaßt werden.

Vorzugsweise werden bei dem erfindungsgemäßen Verfahren Mikrowellen zur Erzeugung des elektromagnetischen Feldes verwendet, die mit einer Mikrowellenröhre, insbesondere einem Klystron oder einem Magnetron, erzeugt werden. In einigen Fällen kann es auch vorteilhaft sein, ein elektromagnetisches Feld mit Hilfe von Millimeterwellen zu erzeugen, da es letztlich nur darauf ankommt, eine Energiedichte zu erreichen, die ausreicht, um die Molekülbindungen der im strömenden Fluid enthaltenen Einzelmoleküle und Molekülverbände aufzubrechen.

Bei der praktischen Realisierung des erfindungsgemäßen Verfahrens ist es wichtig, daß das strömende Fluid und die das elektromagnetische Feld erzeugende Quelle von einem abschirmenden Gehäuse umgeben sind und daß das Fluid durch einen abschirmenden Kanal geführt wird, wobei die Abschirmung sowohl dem Schutz der Umgebung, insbesondere dem Schutz von Bedienungspersonal gegen elektromagnetische Felder bzw. Strahlungen dient als auch der Konzentration der elektromagnetischen Wellen auf einen konzentrierten Einwirkungsbereich, in dem die angestrebten chemischphysikalischen Reaktionen ablaufen sollen.

Als besonders vorteilhaft hat es sich dabei erwiesen, wenn innerhalb des abschirmenden Kanals für das strömende Fluid eine interne Gasführung aus einem für die elektromagnetischen Wellen gut durchlässigen Material vorgesehen ist, insbesondere aus einem hochhitzebeständigen Material, wie z.B. Quarzglas oder einem Keramikmaterial, welches für die Wellen des elektromagnetischen Feldes gut durchlässig ist, andererseits jedoch eine Molekülstruktur besitzt, in der durch die elektromagnetischen Wellen keine oder nur geringe Schwingungen herbeigeführt werden, so daß das Vorhandensein des elektromagnetischen Feldes selbst nur Zu einer minimalen Erwärmung der internen Gasführung führt. Dabei hat es sich auch als vorteilhaft erwiesen, wenn der Querschnitt der internen Gasführung zur Optimierung der Wirkung des elektromagnetischen Feldes und zur Minimierung des zur Felderzeugung erforderlichen Energieaufwandes entsprechend der Energieverteilung des elektromagnetischen Feldes derart gewählt wird, daß der freie Querschnitt bzw. die freien Querschnitte für das strömende Fluid sich mit Bereichen höchster Energiedichte des magnetischen Feldes decken.

Es hat sich nämlich gezeigt, daß innerhalb eines abschirmenden Gehäuses bzw. Kanals stehende Wellen bzw. Feldkonzentrationen auftreten, deren räumliche Verteilung durch Form und Abmessungen der elektrisch gut leitenden Abschirmung bestimmt wird. Diese Bereiche hoher Energiedichte können in Ausgestaltung des erfindungsgemäßen Verfahrens dann optimal genutzt werden, wenn durch entsprechende interne Führungen eine Strömungsverteilung herbeigeführt wird, bei der zumindest der überwiegende Teil des strömenden Mediums gezielt die Bereiche mit hoher Energiedichte passiert.

Auch unabhängig vom Vorhandensein interner Führungen für das strömende Fluid, bei dem es sich im allgemeinen um Gas handelt, bei dem es sich aber auch um eine Flüssigkeit handeln kann, besteht generell die Möglichkeit, die Form des abschirmenden Gehäuses bzw. des Strömungskanals so zu wählen, daß die Wände in einem Bereich geringer Energiedichte liegen bzw. an einen solchen Bereich angrenzen, da auf diese Weise die Wärmebelastung des Gehäusematerials auf ein Minimum reduziert werden kann, wodurch sich ggf. auch die Installation entsprechender Anlagen deutlich vereinfacht, da für das Gehäuse keine spezielle Wärmeisolation gegenüber angrenzenden Bauteilen vorgesehen werden muß. In diesem Zusammenhang ist in weiterer Ausgestaltung der Erfindung auch zu beachten, daß bei Einsatz mehrerer Quellen für die elektromagnetischen Wellen auch die Phasenlage, mit der diese Quellen arbeiten, einen wesentlichen Einfluß auf die Form der stehenden Wellen und die Lage der Bereiche maximaler Energiedichte hat. Bei geeigneter Wahl der entstehenden Interferenzmuster lassen sich dabei die Voraussetzungen für eine einfache, optimale Führung der einzelnen Teilströme des strömenden Mediums erreichen.

Was die Vorrichtung anbelangt, so wird die gestellte Aufgabe durch eine Vorrichtung gemäß Patentanspruch 9 gelöst.

Was speziell die Probleme der Abgasreinigung von Brennkraftmaschinen, insbesondere Dieselmotoren, anbelangt, so besteht ein wichtiger Aspekt des erfindungsgemäßen Verfahrens ferner in einem verbessertes Verfahren zum Reinigen von keramischen Abgasfilterkörpern, mit dem es möglich ist, während des Betriebes der das Abgas erzeugenden Maschine eine Reinigung der Filterkörper von Rußpartikeln durchzuführen.

Diese Aufgabe wird gemäß der Erfindung dadurch gelöst, daß ein Filterkörper zum Reinigen einer Abgasströmung von Rußpartikeln mit Mikrowellen bestrahlt wird.

Die Erfindung basiert auf der Erkenntnis, daß die Temperatur keramischer Materialien durch Mikrowellenstrahlung nicht oder kaum erhöht wird, während die Moleküle von Rußpartikeln, insbesondere aufgrund der darin enthaltenen Kohlenwasserstoffrückstände, bei Bestrahlung mit Mikrowellen zu intensiven Schwingungen angeregt werden, was bedeutet, daß die Rußpartikel sehr schnell auf eine Temperatur erhitzt werden, bei der sie verbrennen.

Aufgrund der beschriebenen Auswirkung von Mikrowellenstrahlung auf Keramikmaterial einerseits und Rußpartikel andererseits ergibt sich bei dem erfindungsgemäßen Reinigungsverfahren praktisch keine zusätzliche Belastung für das Keramikmaterial, und zwar unabhängig davon, ob es in Form von Wabenelementen oder Pellets vorliegt. Dennoch erfolgt eine zuverlässige Verbrennung der Rußpartikel auch in den tiefsten Poren und damit eine gründliche Reinigung des Filterkörpers von Rußablagerungen. Anstelle sorgfältig geformter Filterkörper mit Wabenstruktur können mit Vorteil auch preisgünstige Filterkörper mit poröser, schwammartiger Struktur, d.h. mit unregelmäßigen Poren und vielfach verzweigten Kanälen, insbesondere aus $Al_2O_3$ verwendet werden.

Es ist ein besonderer Vorteil des erfindungsgemäßen Verfahrens, daß dieses direkt während des laufenden Betriebes einer den Filterkörper enthaltenden Abgas-Reinigungsvorrichtung im Abgasstrom einer Brennkraftmaschine durchgeführt werden kann, wenn die Mikrowellen-Strahlenquelle am oder im Filterkörpergehäuse angeordnet wird. Andererseits kann das erfindungsgemäße Reinigungsverfahren auch zur schonenden Reinigung von Filterkörpern von Rußpartikeln eingesetzt werden, wenn diese in konventioneller Weise zum Regenerieren ausgebaut werden.

Wenn die Reinigung der Abgasfilterkörper nach dem erfindungsgemäßen Verfahren während des laufenden Betriebes durchgeführt werden soll, dann besteht zunächst die Möglichkeit, den Filterkörper kontinuierlich mit Mikrowellen zu bestrahlen. Es besteht aber auch die Möglichkeit, den Filterkörper periodisch in geeigneten Abständen zu bestrahlen, um jeweils nach einer gewissen Zeit die inzwischen abgeschiedenen Rußpartikel abzubrennen.

Weiterhin besteht die Möglichkeit, die Bestrahlung des Filterkörpers mit Mikrowellen in Abhängigkeit von mindestens einem für den Rußanfall am Filterkörper relevanten Betriebsparameter durchzuführen, wobei die Bestrahlung des Filterkörpers insbesondere in Abhängigkeit vom Abgasdruck und/oder der Abgas- bzw. der Filterkörpertemperatur erfolgen kann.

Besonders vorteilhaft ist es beispielsweise, bei einem Kaltstart einer Diesel-Brennkraftmaschine sofort mit der Mikrowellenbestrahlung des bzw. der Filterkörper zu beginnen, um einerseits die beim Start entstehenden besonders fetten Rußpartikel sofort zu entfernen und um andererseits unmittelbar nach Beginn des Betriebes durch das Verbrennen der Rußpartikel in dem mindestens einen Filterkörper eine für eine katalytische Abgasreinigung geeignete, erhöhte Temperatur eines keramischen Filterkörpers zu erreichen.

Zur Durchführung des erfindungsgemäßen Verfahrens hat sich eine Abgasreinigungsvorrichtung mit mindestens einem in einem Filterkörpergehäuse angeordneten keramischen Abgasfilterkörper als günstig erwiesen, die dadurch gekennzeichnet ist, daß angrenzend an den mindestens einen Abgasfilterkörper eine Mikrowellenstrahlenquelle vorgesehen ist. Diese Strahlenquelle kann dabei durch ein für Mikrowellenstrahlung durchlässiges "Fenster" des Filterkörpergehäuses und eine auf der Außenseite des Gehäuses angeordnete Mikrowellenröhre gebildet sein. In vorteilhafter Ausgestaltung der Erfindung besteht aber auch die Möglichkeit, eine Mikrowellenröhre direkt in dem Filterkörpergehäuse anzubringen. Dabei ist es wichtig, daß das Filterkörpergehäuse aus einem für Mikrowellen undurchlässigen Material hergestellt ist. Ferner sollte das Filterkörpergehäuse im Bereich seines Abgaseinlasses und/oder seines Abgasauslasses gegen das Austreten von Mikrowellenstrahlung abgedichtet sein, was vorzugsweise durch eine Labyrinthdichtung erfolgt, welche eine Abschirmung für die Strahlung bildet, ohne die Abgasströmung nachteilig zu beeinflussen. Besonders vorteilhaft sind an Ein- und Auslaß sogenannte Lambda-Viertel-Fallen, beispielsweise aus kurzen Rohrabschnitten geeigneten Durchmessers. Günstig ist es ferner, wenn der Mikrowellenröhre Kühleinrichtungen zugeordnet sind, um eine Überhitzung der Röhre durch die heißen Abgase zu vermeiden.

In Ausgestaltung der Erfindung ist es ferner vorteilhaft, wenn in dem Filtergehäuse Blenden zum Schutz der Mikrowellenröhre gegen reflektierte Mikrowellenstrahlung vorgesehen sind, da die reflektierte Strahlung ebenfalls Betriebsstörungen, insbesondere eine Überhitzung, zur Folge haben könnte.

Besonders vorteilhaft ist in Ausgestaltung der Erfindung die Kombination einer hochtemperaturfesten und eine geringe Längenänderung aufweisenden, internen Führung, beispielsweise in Form eines Quarzrohrs, mit einem Filterkörper, der in dem Führungselement angeordnet insbesondere mittels einer keramischen Masse oder dergleichen fest eingekittet ist. In diesem Fall kann die Abdichtung zwischen dem Gehäuse und dem Führungselement mittels elastischer Dichtungen, beispielsweise aus Glaswolle oder dergleichen, zwischen den Stirnflächen des Führungselements und dem Gehäuse erfolgen, wobei angrenzend an mindestens eine der Dichtungen Federmittel vorgesehen sind, welche unabhängig von temperaturabhängigen Längenänderungen des Führungselementes an den Dichtungen eine ausreichende Vorspannung bzw. Kompressionskraft erzeugen, um die Abdichtung unter allen Betriebsumständen aufrechtzuerhalten, ohne daß bei hoher Temperatur an dem Führungselement axiale Kräfte auftreten, die zu einer Zerstörung desselben führen könnten. Gleichzeitig besitzen die Materialien des Führungselementes und des Filterkörpers vorzugsweise im wesentlichen gleiche, temperaturabhängige Ausdehnungskoeffizienten, so daß zwischen dem Führungselement und dem darin eingesetzten Filterkörper keine Kräfte auftreten, die zu einer Zerstörung des relativ empfindlichen Filterkörpers führen könnten.

In Ausgestaltung der Erfindung bietet sich ferner die Möglichkeit, die Mikrowellenenergie bzw. die Strahlungsenergie gezielt auf ein oder mehrere Punkte eines Filterkörpers zu konzentrieren, indem man die Mikrowellenenergie zunächst in einen Hohlleiter einspeist und aus diesem über eine Antenne zu dem gewünschten Punkt des Filterkörpers abstrahlt, wobei die Antenne vorzugsweise an ihrem freien Ende abgewinkelt ist und zu einer Drehbewegung angetrieben werden kann, um auf einer Kreisbahn liegende Punkte des Filterkörpers gezielt mit Mikrowellenenergie zu bestrahlen. Wenn in weiterer vorteilhafter Ausgestaltung der Erfindung der Drehbewegung der abgewinkelten Antenne eine axiale Bewegung überlagert wird, besteht die Möglichkeit, den bestrahlten Punkt des Filterkörpers längs einer Schraubenlinie wandern zu lassen.

Als besonders vorteilhaft hat es sich auch erwiesen, wenn der Raum zwischen der einlaßseitigen Stirnfläche des Filterkörpers und den angrenzenden Gehäuseteilen gezielt als Resonator für die eingestrahlte Mikrowellenenergie ausgestaltet wird, um bei intermittierend erfolgender Reinigung des Filters möglichst schnell eine für das Abbrennen der gesammelten Rußpartikel geeignete hohe Temperatur erreichen zu können.

Weitere Einzelheiten und Vorteile der Erfindung werden nachstehend anhand einer Zeichnung noch näher erläutert. Es zeigen:

Fig. 1     einen schematischen Längsschnitt durch eine bevorzugte Ausführungsform einer Abgasreinigungsvorrichtung gemäß der Erfindung;

Fig. 2     einen schematischen Längsschnitt durch eine weitere bevorzugte Ausführungsform einer Abgasreinigungsvorrichtung gemäß der Erfindung;

Fig. 3     einen schematischen Längsschnitt durch eine dritte bevorzugte Ausführungsform einer Abgasreinigungsvorrichtung gemäß der Erfindung; und

Fig. 4     einen Querschnitt durch die Vorrichtung gemäß Fig. 3 längs der Linie 4-4 in dieser Figur.

Fig. 5     einen schematischen Längsschnitt durch eine bevorzugte Ausführungsform einer erfindungsgemäßen Abgasfiltereinrichtung und

Fig. 6     eine schematische Darstellung einer bevorzugten Ausführungsform einer Anordnung zum Einspeisen von Mikrowellenenergie in eine erfindungsgemäße Filteranordnung.

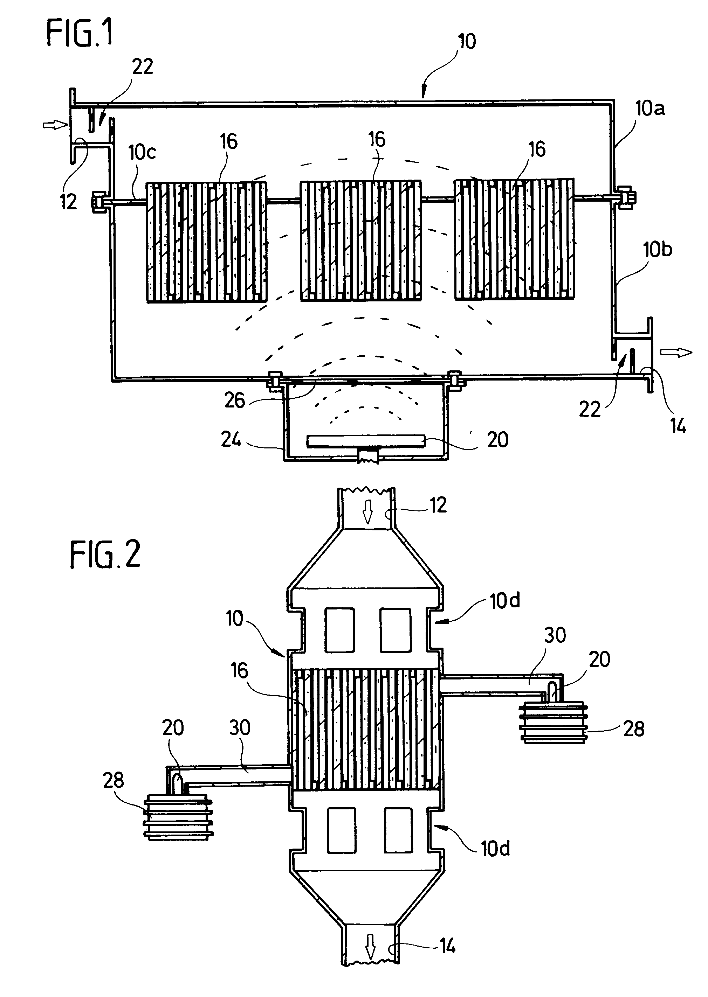

Im einzelnen zeigt Fig. 1 eine Abgasreinigungsvorrichtung mit einem Filterkörpergehäuse 10, welches einen Abgaseinlaß 12 und einen Abgasauslaß 14 aufweist. Das Filterkörpergehäuse weist ein Abgaseintrittsgehäuse 10a mit dem Einlaß 12 und ein Abgasaustrittsgehäuse 10b mit dem Auslaß 14 auf. In eine zwischen den beiden Gehäuseteilen 10a, 10b liegende Trennwand 10c sind mehrere Abgas-Filterkörper in Form keramischer Wabenelemente 16 eingesetzt. Die Wabenelemente 16 besitzen in der eingangs beschriebenen Weise durchgehende Kanäle, welche abwechselnd am oberen und am unteren Ende geschlossen sind, so daß das Abgas, welches über den Einlaß 12 in das Abgaseintrittsgehäuse 10a eintritt, in die - in der Zeichnung nach oben - offenen Kanäle eintritt, die Zwischenwände passiert und die Filterkörper über die nach unten offenen Kanäle der Filterkörper bzw. Wabenelemente 16 verläßt.

Erfindungsgemäß ist unterhalb der Wabenelemente 16 unterhalb des Bodens des Abgasaustrittsgehäuses eine Mikrowellenröhre 20 montiert, mit deren Hilfe im Bereich der Wabenelemente 16 eine ausreichend intensive Mikrowellenstrahlung erzeugbar ist, um Rußpartikel aus dem Abgas, welche sich an den Zwischenwänden der Wabenelemente 16 absetzen, zusätzlich über die Abgastemperatur hinaus zu erwärmen und schließlich zu verbrennen. Beim Ausführungsbeispiel ist die Mikrowellenröhre in einem topfförmigen Gehäuse 24 unter einer Öffnung des Bodens des Abgasaustrittsgehäuses 10b angeordnet, wobei die Öffnung durch eine für Mikrowellen gut durchlässige Membran 26 verschlossen sein kann, die das heiße Abgas von der Röhre 20 fernhält.

Auf die beschriebene Weise wird ein kontinuierlicher Betrieb der Abgasreinigungsvorrichtung bzw. der damit verbundenen Brennkraftmaschine ermöglicht, was speziell bei größeren Stromerzeugungsanlagen, insbesondere in Form sogenannter Blockheizkraftwerke mit Dieselmotoren, von erheblicher Bedeutung ist. Dabei kann es sich bei den Filterkörpern bzw. Wabenelementen 16 um handelsübliche LKW- oder PKW-Filterkörper handeln, die in großen Stückzahlen gefertigt werden und daher relativ preiswert zur Verfügung stehen. Ferner ist an Einlaß 12 und Auslaß 14 jeweils eine Labyrinthdichtung 22 vorgesehen, die das unerwünschte Austreten von Mikrowellenstrahlung zumindest weitgehend verhindert, ohne die Abgasströmung nachteilig zu beeinflussen.

Andererseits macht ein Blick auf die Zeichnung deutlich, daß die erfindungsgemäße Abgasreinigungsvorrichtung problemlos in der Weise abgewandelt werden kann, daß zu regenerierende Filterkörper in die dafür vorgesehenen Öffnungen der Trennwand 10c eingesetzt und dort durch Bestrahlung mit Mikrowellen schonend gereinigt und regeneriert werden, wobei es vorteilhaft ist, wenn in dem Filterkörpergehäuse anstelle der Abgasströmung eine Luftströmung erzeugt wird, um die erforderliche Verbrennungsluft zuzuführen und die bei der Filterreinigung entstehende Abluft abzuführen.

Fig. 2 zeigt ein abgewandeltes Ausführungsbeispiel einer Abgasreinigungsvorrichtung gemäß der Erfindung mit einem Filterkörpergehäuse 10, welches einen zylindrischen Mittelteil und konisch verjüngte Enden mit einem Abgaseinlaß 12 bzw. einem Abgasauslaß 14 aufweist. Im Mittelteil des Filterkörpergehäuses 10 ist ein einziger Abgas-Filterkörper in Form eines keramischen Wabenelements 16 angeordnet. Zwischen den Enden des Wabelements 16 und dem Abgaseinlaß 12 sowie dem Abgasauslaß 14 ist jeweils eine sogenannte Lambda-Viertel-Falle 10d vorgesehen, um das Austreten von Mikrowellenstrahlung am Abgaseinlaß 12 bzw. am Abgasauslaß 14 zu verhindern. Das Gehäuse 10 ist an einer geeigneten Stelle geteilt (nicht gezeigt), um das Wabenelement 16 einsetzen bzw. auswechseln zu können.

Bei dem Ausführungsbeispiel gemäß Fig. 2 sind zwei Mikrowellenröhren 20 vorgesehen, die jeweils von einem Kühlkörper 28 umgeben sind und deren Strahlung über jeweils einen Kanal 30 dem einlaßseitigen Bereich bzw. dem auslaßseitigen Bereich des Wabenelements 16 zuführbar ist. Da die Mikrowellenröhren 20 durch die rohrförmigen Kanäle 30 im Abstand von dem Gehäuse 10 gehalten werden und außerdem durch Kühlkörper 28 gekühlt werden, ergibt sich ein guter Schutz gegen eine Überhitzung der Mikrowellenröhren 20 durch den heißen Abgasstrom, welcher das Wabenelement 16 passiert. Hinsichtlich der Reinigungswirkung bzw. der Verbrennung der Rußpartikel arbeitet die Abgasreinigungsvorrichtung gemäß Fig. 2 im wesentlichen ebenso wie die Abgasreinigungsvorrichtung gemäß Fig. 1 und kann wie diese ebenfalls zur Regeneration verrußter Abgas-Filterkörper verwendet werden.

Jede der erwähnten Lambda-Viertel-Fallen 10d kann in der Praxis aus einem in dem Gehäuse 10 angeordneten Flansch bestehen, in dem rohrförmige Öffnungen bzw. Rohrabschnitte angeordnet sind, deren kritische Größe etwa ein Viertel der Wellenlänge der Mikrowellenstrahlung beträgt und die das zu reinigende bzw. das gereinigte Abgas im wesentlichen unbehindert passieren lassen, andererseits jedoch für Mikrowellenstrahlung im wesentlichen undurchlässig sind.

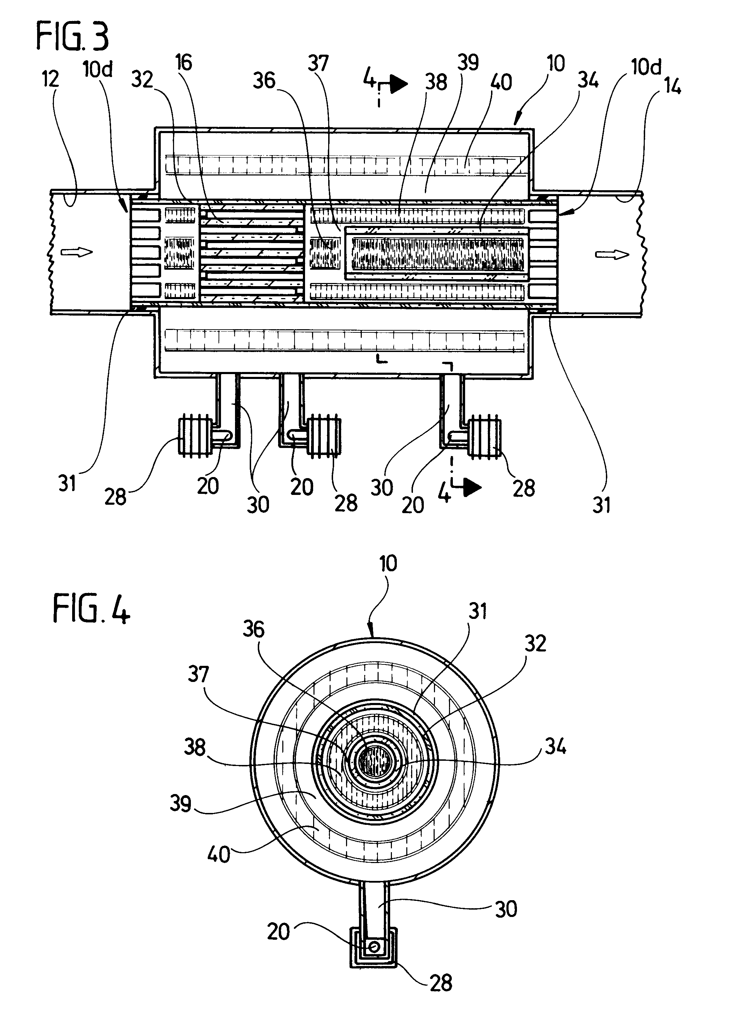

Fig. 3 zeigt ein weiteres, abgewandeltes Ausführungsbeispiel einer Abgasreinigungsvorrichtung zur Durchführung des erfindungsgemäßen Verfahrens. Die gezeigte Vorrichtung besitzt wieder ein Filtergehäuse 10 mit einem Abgaseinlaß 12 und einem Abgasauslaß 14 und mit jeweils einer Lambda-Viertel-Falle 10d am Abgaseinlaß 12 bzw. am Abgasauslaß 14 zum Verhindern des Austretens von Mikrowellenstrahlung. Das Gehäuse besteht aus einem strahlungsabschirmenden, elektrisch gut leitenden Material. Mit dem Gehäuse 10 sind insgesamt in axialer Richtung im Abstand voneinander drei Mikrowellenröhren 20 verbunden, die jeweils durch Kühlkörper 28 gekühlt werden. Weiterhin ist wieder ein Filterkörper in Form eines Wabenelements 16 vorgesehen.

Abweichend von den Ausführungsbeispielen gemäß Fig. 1 und 2 ist der Filterkörper bzw. das Wabenelement 16 nicht direkt in das Gehäuse 10 eingesetzt, sondern in ein für Mikrowellen durchlässiges Quarzrohr 32, welches an seinen Enden dichtend in den Abgaseinlaß 12 bzw. den Abgasauslaß 14 eingesetzt ist. Ferner ist im Inneren des Quarzrohrs 32 stromabwärts von dem Wabenelement 16 ein weiteres Rohr 34 aus hochhitzebeständigem Material, wie z.B. Quarz oder einem Keramikmaterial, angeordnet, welches für die Mikrowellen gut durchlässig ist. Dieses weitere Rohr 34 ist relativ dickwandig, wie dies nachstehend im Zusammenhang mit der Erläuterung der Funktion der Abgasreinigungsvorrichtung gemäß Fig. 3 noch näher erläutert werden soll. Die Dichtungen 31 an den Enden des Rohres 32 bestehen vorzugsweise aus hochhitzebeständiger Mineralwolle, die vor der Montage an dem Rohr 32 vorzugsweise mittels einer Schrumpf-Folie festgelegt wird

Im einzelnen arbeitet die in Fig. 3 gezeigte Abgasreinigungsvorrichtung bis zum Auslaß des Wabenelements 16 im wesentlichen ebenso, wie dies vorstehend für die Ausführungsbeispiele gemäß Fig. 1 und 2 erläutert wurde. Eine entscheidende Verbesserung der Abgasreinigungsvorrichtung gemäß Fig. 3 besteht jedoch darin, daß zusätzlich eine "Nachverbrennung" erfolgt, und daß die Konfiguration des elektromagnetischen Feldes im Inneren des Gehäuses 10 nutzbringend zur Verbesserung des Wirkungsgrades, bezogen auf die über die Mikrowellenröhren 20 eingespeiste Energie, ausgenutzt wird.

Wie in Fig. 4 schematisch dargestellt, ergibt sich nämlich im Inneren eines aus einem abschirmenden Material bestehenden, zylindrischen Filterkörpergehäuses 10 aufgrund der Reflexionen an der Gehäusewand eine Feldverteilung mit einem zentralen Kernbereich 36 besonders hoher Energiedichte und mit zwei dazu konzentrischen, zylindrischen äußeren Bereichen 38, 40 erhöhter Energiedichte, wobei diese Bereiche 36, 38, 40 durch konzentrische, zylindrische Bereiche 37, 39 getrennt sind. Dabei ist zu beachten, daß die Energiedichte in dem inneren Bereich 38 deutlich höher ist als in dem äußeren Bereich 40. Der Innendurchmesser des Rohres 32 wird nunmehr so gewählt, daß er etwa dem äußeren Umfang des Bereichs 38 entspricht. Ferner werden Dicke und Durchmesser des inneren Rohres 34 so gewählt, daß dieses im wesentlichen die gesamte Querschnittsfläche des Bereichs 37 abdeckt. Auf diese Weise wird erreicht, daß der aus dem Keramikfilter bzw. dem Wabenelement 16 austretende Abgasstrom auf die den Bereichen 36 und 38 entsprechenden Bereiche eingeschränkt bzw. konzentriert wird. In diesen Bereichen ergeben sich außerordentlich hohe Temperaturen der bereits in dem Filterkörper 16 aufgeheizten Gasströmung, so daß selbst auf einer kurzen Strecke und bei hoher Strömungsgeschwindigkeit feine Rußpartikel, die das Filter passiert haben, restlos verbrannt werden, und andere chemische Bestandteile des Abgasstromes durch die Wirkung des elektromagnetischen Feldes und die hohe Temperatur der Abgasströmung abgebaut bzw. umgewandelt werden.Auf diese Weise ergibt sich bei der Abgasreinigungsvorrichtung gemäß Fig. 3 und 4 eine erheblich verbesserte Reinigungs- und Entgiftungswirkung, während andererseits durch die Eingrenzung der Umsetzungsprozesse auf die durch die Rohre 32, 34 definierten Zonen, bezogen auf die eingespeiste Energie, ein verbesserter Wirkungsgrad erreicht wird. Darüber hinaus hat es sich gezeigt, daß im Hinblick auf die geringe Energiedichte angrenzend an die Wand des Gehäuses 10 und im Hinblick auf das Fehlen von Umwandlungsprozessen in dem zwischen dem Rohr 32 und dem Gehäuse 10 befindlichen Raum nur eine relativ geringe Temperaturerhöhung des Gehäuses selbst auftritt, was insbesondere bei mobilem Einsatz die Montage erleichtert und vereinfacht.

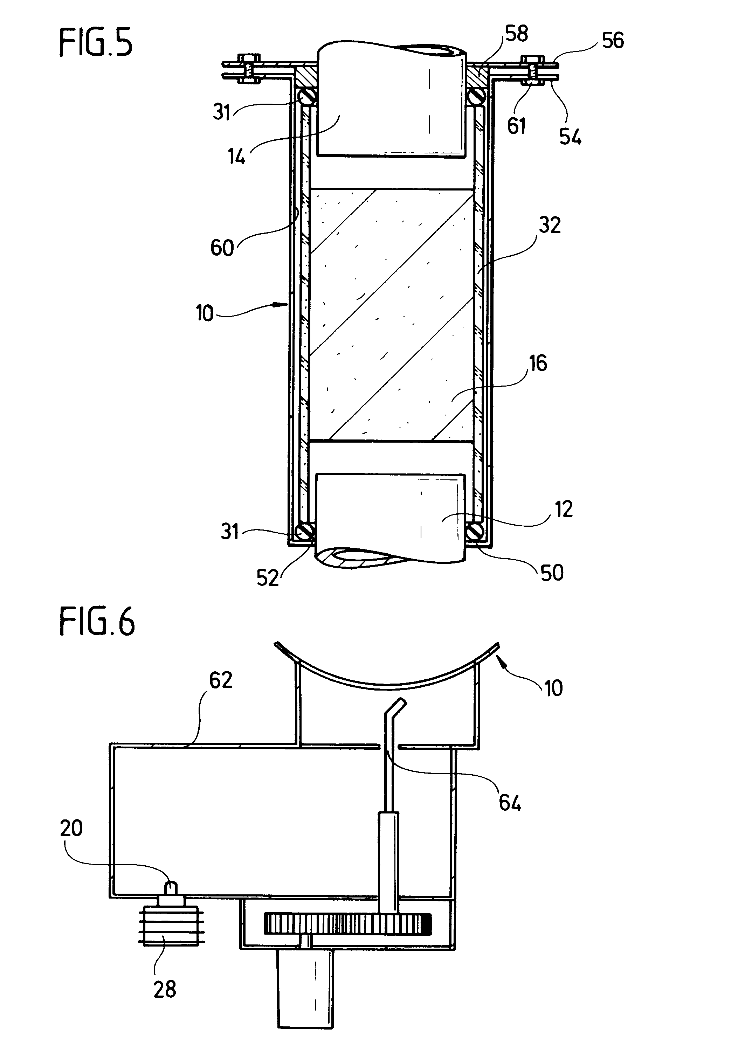

In Fig. 5 ist eine bevorzugte Ausführungsform der Ausgestaltung der im Zusammenhang mit dem Ausführungsbeispiel gemäß Fig. 3 bereits kurz angesprochenen Abdichtung des Rohres 32 gegenüber dem Gehäuse 10 dargestellt. Bei dieser Ausführungsform ist am einlaßseitigen Ende des Gehäuses 10 ein umlaufender, nach innen vorspringender Flansch 50 vorgesehen, welcher eine Öffnung definiert, in die der rohrförmige Abgaseinlaß 12 dichtend eingesetzt, insbesondere eingeschweißt, ist, wobei der Abgaseinlaß 12 mit seinem inneren Ende etwas in das Innere des Gehäuses 10 vorsteht, so daß sich zwischen der Außenwandfläche des Abgaseinlasses 12, der Innenseite des Flansches 50 und der Innenwand des angrenzenden Teils des Gehäuses 10 ein umlaufender Kanal 52 ergibt, in dem eine ringförmige Dichtung 31 angeordnet ist.

Am auslaßseitigen Ende des Gehäuses 10 ist ein nach außen abstehender Flansch 54 vorgesehen, der längs seines äußeren Umfangs mit einem Andruckring 56 verschraubt ist. Der Andruckring 56 ist längs seines inneren Umfangs mit einem Preßring 58 versehen, welcher teilweise in das auslaßseitige Ende des Gehäuses 10 vorsteht und mit seiner äußeren Umfangsfläche gleitverschieblich an der Innenwand des Gehäuses 10 anliegt. Die innere Umfangsfläche des Preßrings 58 definiert eine Auslaßöffnung, in die der rohrförmige Abgasauslaß 14 dichtend eingesetzt, insbesondere eingeschweißt ist, und zwar derart, daß sein inneres Ende wiederum etwas in das Innere des Gehäuses 10 vorsteht. Auf diese Weise wird auf der Auslaßseite des Gehäuses 10 ein zweiter, umlaufender Kanal 60 definiert, nämlich zwischen der Gehäuseinnenwand, der inneren Stirnfläche des Preßrings 58 und der Außenwand des vorstehenden, inneren Endes des Abgasauslasses 14. In diesem zweiten Kanal 60 ist eine zweite, ringförmige Dichtung 31 eingelegt. Das Rohr 32, welches aus Quarz, Keramik oder einem anderen hochtemperaturfesten, für Mikrowellen durchlässigen, eine geringe Wärmedehnung aufweisenden Material besteht, stützt sich mit seinen beiden Enden bzw. seinen Stirnflächen an den einander gegenüberliegenden, ringförmigen Dichtungen 31 ab, wobei durch die natürliche Elastizität und Federwirkung des Andruckringes 56 und des äußeren Flansches 54, die beide üblicherweise aus Stahlblech bestehen, für den Preßring 58 unter allen Betriebsbedingungen eine auf das Innere des Gehäuses 10 zu gerichtete Federvorspannung ergibt, die dafür sorgt, daß zwischen den Dichtungen 31 und den Enden des Rohres 32 unter allen Betriebsbedingungen ein Anpreßdruck aufrechterhalten wird, der an beiden Rohrenden für eine zuverlässige Dichtwirkung der Dichtungen 31 sorgt, so daß ein Eindringen von Abgas in den Zwischenraum zwischen der Außenwand des Rohres 32 und der Innenwand des Gehäuses 10 zuverlässig verhindert wird. Gleichzeitig verhindert die definierte, über den Preßring 58 auf das Rohr 32 übertragene Kraft eine Überlastung des Rohres 32 in axialer Richtung, da temperaturbedingte Längenänderungen des Rohres durch entsprechende, axiale Bewegungen des Preßrings 58 aufgefangen werden können. Die im Einzelfall von dem Preßring auf die Dichtungen 31 und das Rohr 32 übertragene Kraft ergibt sich dabei aus den Abmessungen und der Federcharakteristik der Flansche 54, 56, wobei die Schraubverbindung 64 zwischen der äußeren, umlaufenden Rändern der Flansche eine bequeme Möglichkeit zum Einstellen der im Einzelfall gewünschten Vorspannung bietet. Thermische Längenänderungen des Rohres 32 können also nicht zu Kräften führen, die eine Überlastung und Zerstörung des Rohres zur Folge haben könnten. Außerdem können radiale Wärmedehnungen des Rohres ebenfalls nicht zu einer Überlastung des Rohrmaterials führen, wenn das Rohr 32 mit ausreichendem, radialen Abstand bzw. Spiel in das Gehäuse 10 eingesetzt ist.

Bei dem in Fig. 5 gezeigten Ausführungsbeispiel ist der Filterkörper 16 mit Hilfe eines geeigneten temperaturfesten Klebers, insbesondere einer keramischen Vergußmasse im Inneren des Rohres 32 festgelegt. Der Filterkörper 16 und das Rohr 32 werden dadurch zu einer monolithischen Einheit verbunden. Wenn der Filterkörper aus Keramikmaterial besteht, und wenn das Rohr aus Quarz oder einem anderen hochtemperaturfesten Material besteht und beide Elemente folglich nur eine geringe, im wesentlichen gleiche Wärmedehnung besitzen, dann wird die Belastung des Filterkörpers aufgrund von temperaturbedingten Änderungen seiner Abmessungen auf ein Minimum reduziert. Außerdem bildet das Rohr für das aufgrund seiner Porosität sehr empfindliche Material des Filterkörpers gewissermaßen einen schützenden und stützenden, äußeren Mantel für den Filterkörper. Hierdurch werden die häufig zu beobachtenden Probleme vermieden, die sich ergeben, wenn ein Filterkörper über relativ kompakte Dichtungen, beispielsweise aus Glasfasermaterial, direkt mit einem metallischen Gehäuse verbunden ist, welches bei Temperaturänderungen erheblichen Änderungen in Länge und Durchmesser unterworfen ist, wobei an dem keramischen Filterkörper Kräfte wirksam werden, die häufig schon nach kurzer Betriebszeit zu Rissen und Sprüngen im Filtermaterial und letztlich zu einer Zerstörung des Filterkörpers führen. Dabei versteht es sich, daß diese Art der Halterung eines keramischen Filterkörpers unabhängig davon besonders vorteilhaft ist, unabhängig davon, ob eine Reinigung des Filterkörpers durch Mikrowellen erfolgt oder nicht. Die erfindungsgemäße Art der monolithischen Verbindung eines keramischen Filterkörpers mit einem hochtemperaturfesten Rohr aus Quarz oder dergleichen sowie die vorstehend beschriebene Art der "elastischen" Befestigung des Rohres in dem Filtergehäuse sind also auch bei konventionellen Abgaskatalysatoren hervorragend dazu geeignet, Schäden am Filterkörper zu vermeiden und eine lange Lebensdauer desselben zu gewährleisten.

Im Verlauf umfangreicher Versuche im Zusammenhang mit der Reinigung von Abgasen von Dieselmotoren mit Hilfe poröser, keramischer Filterkörper der betrachteten Art, hat es sich ferner gezeigt, daß sich die Hauptmasse der Rußpartikel unmittelbar auf der einlaßseitigen Stirnfläche des Filterkörpers und in den daran angrenzenden Filterkörperöffnungen absetzt. Die mit Ruß beschichteten Flächen des Filterkörpers entwickeln dabei in Verbindung mit der erhöhten Temperatur des Filterkörpers auf der Einlaßseite offenbar eine Art leitfähiger Schicht, die für Mikrowellen ein gewisses Reflexionsvermögen aufweist. Dieser Effekt wird in Ausgestaltung der Erfindung dazu genutzt, den einlaßseitigen Teil des Gehäuses 10 bis zur einlaßseitigen Stirnfläche des Filterkörpers 16 als Resonanzraum für die eingestrahlten Mikrowellen zu verwenden und auf diese Weise an der Stirnfläche des Filterkörpers eine hohe Energiedichte zu erreichen.

Weiterhin hat es sich im Lauf umfangreicher Versuche gezeigt, daß die Abgasströmung bei Abgasfiltern der betrachteten Art häufig eine so hohe Geschwindigkeit hat, daß sich eine gewisse Kühlung des Filtermaterials ergibt, die bei relativ schwacher Energiezufuhr in Form von Mikrowellen zur Folge haben kann, daß die gewünschte Reaktionstemperatur für die zu verbrennenden Rußpartikel nicht mehr erreicht wird.

Unter Berücksichtigung dieser Versuchsergebnisse hat es sich als vorteilhaft erwiesen, den Abgasstrom durch den Filterkörper zu unterbrechen, insbesondere in ein parallelgeschaltetes Filter umzuleiten, sobald sich eine ausreichende Rußmenge in bzw. an dem Filterkörper gesammelt hat. Bei unterbrochenem Abgasstrom und bei Ausgestaltung des vorderen Teils des Gehäuses 10 als Resonanzraum läßt sich selbst mit einer relativ schwachen Mikrowellenquelle an der Stirnfläche des Filterkörpers 16 sehr schnell eine für die Verbrennung der abgesetzten Rußpartikel ausreichende Temperatur erzielen. Wenn dann die Verbrennung eingeleitet ist und das Filter dann erneut mit dem Abgasstrom beaufschlagt wird, läßt sich beobachten, daß die Front, an der eine Verbrennung der abgesetzten Rußpartikel stattfindet, ohne weitere Zuführung von Mikrowellenenergie sehr schnell in Längsrichtung durch den gesamten Filterkörper hindurch wandert, bis sie das auslaßseitige Ende desselben erreicht, so daß alle in dem Filter abgeschiedenen Rußpartikel zuverlässig verbrannt werden und das Filter somit erneut für längere Zeit für einen effektiven Filterbetrieb zur Verfügung steht. Speziell bei Nahverkehrsbussen, die nach einer gewissen Fahrzeit von beispielsweise einer Stunde ihre Endhaltestelle erreichen und dort einen Aufenthalt von einigen Minuten haben, bietet sich unter Ausnutzung der beobachteten Phänomene die vorteilhafte Möglichkeit, die Filterreinigung bei abgeschaltetem Motor einzuleiten und das Filter vor bzw. bei Beginn einer neuen "Runde" vollständig zu reinigen.

In weiterer Ausgestaltung der Erfindung besteht gemäß Fig. 6 der Zeichnung die Möglichkeit, eine Mikrowellenröhre 20 an einen Hohlleiter 62 anzukoppeln und die Mikrowellenenergie aus dem Hohlleiter 62 über eine Antenne 64 in den Filterkörper einzustrahlen. Die Antenne entwickelt dabei eine hohe Bündelungswirkung, so daß die Mikrowellenenergie in einem eng begrenzten Bereich des Filterkörpers wirksam wird. Auf diese Weise kann an einer geeigneten Stelle des Filterkörpers im Bereich der einlaßseitigen Stirnwand desselben ggf. auch während des laufenden Betriebes der Brennkraftmaschine eine schnelle Zündung der Rußpartikel erreicht werden und entsprechend der Ausbreitung der Abbrennfront von dem angestrahlten Punkt eine vollständige Reinigung des Filterkörpers.

In weiterer vorteilhafter Ausgestaltung der Erfindung kann die der Abstrahlung der Mikrowellenenergie dienende Antenne im Bereich ihres freien Endes abgewinkelt sein und mittels geeigneter Antriebseinrichtungen zu einer Drehbewegung angetrieben werden, so daß der Bereich, in dem der Filterkörper mit konzentrierter Mikrowellenenergie beaufschlagt wird, entsprechend der Drehbewegung der Antenne auf einer Kreisbahn wandert. Eine schraubenförmige Bewegung des Bereichs hoher Energiebündelung läßt sich dadurch erreichen, daß der Drehbewegung der Antenne eine axiale Bewegung derselben überlagert wird. Eine entsprechende Wirkung läßt sich bei feststehender Antenne durch Antreiben des Filterkörpers zu einer Drehbewegung und ggf. zu einer überlagerten, axialen Bewegung erreichen.

Aus der vorstehenden Beschreibung wird deutlich, daß Verfahren und Vorrichtung gemäß der Erfindung für die Umwandlung unterschiedlichster Stoffe in Form von Gasen, Flüssigkeiten oder partikelförmigen Feststoffen geeignet sind und beispielsweise bei der Synthese neuer Stoffe Anwendung finden können. Das bevorzugte Einsatzgebiet der Erfindung ist jedoch die Abgasreinigung, wobei Abgase aus den unterschiedlichsten Quellen gereinigt werden können, beispielsweise Abluft aus Lackieranlagen, Abluft aus Tankanlagen, Abluft, wie sie bei der Produktion von Textilien anfällt - in diesem Fall sind in der Abluft häufig größere Mengen von Aerosolen enthalten - usw. Dabei besteht auch die Möglichkeit der Nachrüstung von bereits bestehenden Anlagen, wobei beispielsweise vorhandene Kamine mit einem abschirmenden Mantel versehen werden können - innerhalb oder außerhalb des vorhandenen Kamins, um das Abgas in der so gebildeten Abluftstrecke mittels elektromagnetischer Felder, insbesondere mittels Mikrowellen, noch weiter zu reinigen.

Aus der vorstehenden Beschreibung wird ferner deutlich, daß die erfindungsgemäße Abgasreinigungsvorrichtung auch zum Regenerieren von Filtern mit keramischen Pellets geeignet ist, wenn letztere in für eine Durchstrahlung mit Mikrowellen geeignete Behälter eingefüllt werden.

**Patentansprüche**

1.   Verfahren zum Umwandeln von von einem, insbesondere gasförmigen, strömenden Fluid transportierten Einzelmolekülen und Molekülverbänden, dadurch gekennzeichnet, daß die Molekülbindungen der Einzelmoleküle und Molekülverbände zumindest teilweise mittels eines elektromagnetischen Feldes, insbesondere eines Mikrowellenfeldes, durch Anregen von Schwingungen in den Molekülen aufgebrochen werden.

2.   Verfahren nach Anspruch 1, dadurch gekennzeichnet, daß die das elektromagnetische Feld erzeugende Quelle gegenüber der Umgebung durch ein Gehäuse abgeschirmt wird, in der ein gasförmiges, strömendes Fluid innerhalb einer internen Gasführung aus einem für die elektromagnetischen Wellen gut durchlässigen Material geführt wird.

3.   Verfahren nach Anspruch 2, dadurch gekennzeichnet, daß der Querschnitt der internen Gasführung zur Optimierung der Wirkung des elektromagnetischen Feldes und zur Minimierung des zur Felderzeugung erforderlichen Energieaufwandes entsprechend der Energieverteilung des elektromagnetischen Feldes derart gewählt wird, daß der freie Querschnitt bzw. die freien Querschnitte für das strömende Fluid sich mit Bereichen höchster Energiedichte des elektromagnetischen Feldes decken.

4.   Verfahren nach Anspruch 2, dadurch gekennzeichnet, daß für die interne Gasführung und ggf. darin angeordnete, zusätzliche Elemente ein hochhitzebeständiges Material, insbesondere ein Keramikmaterial, verwendet wird, welches für die Wellen des elektromagnetischen Feldes gut durchlässig ist und von dem elektromagnetischen Feld selbst allenfalls minimal erwärmt wird.

5.   Verfahren nach Anspruche 1, dadurch gekennzeichnet, daß Abmessungen und Form des das elektromagnetische Feld einschließenden äußeren Gehäuses, die Lage und die Form ein oder mehrerer Quellen für die Erzeugung des elektromagnetischen Feldes und/oder die Phasenlage der von mindestens zwei Quellen erzeugten elektromagnetischen Felder derart gewählt werden, daß sich ein Feld mit stehenden Wellen und mit einer dem strömenden Fluid bzw. dessen Teilströmen optimal angepaßten Energieverteilung ergibt.

6.   Verfahren nach Anspruch 1, dadurch gekennzeichnet, daß als strömendes Fluid ein Trägergas verwendet wird, dem die aufzubrechenden Moleküle bzw. Molekülverbände in dosierter Menge zugesetzt werden.

7.   Verfahren nach Anspruch 6, dadurch gekennzeichnet, daß dem Trägergas eine dosierte Menge von Reagenzien zur Reaktion mit den beim Aufbrechen der Moleküle und Molekülverbände entstehenden Elementen und/oder Molekülen zugesetzt wird.

8.   Vorrichtung zur Durchführung des Verfahrens nach Anspruch 1, dadurch gekennzeichnet, daß ein für elektromagnetische Wellen undurchlässiges Gehäuse vorgesehen ist, daß an dem Gehäuse eine Quelle zum Erzeugen eines elektromagnetischen Feldes vorgesehen ist, daß in dem Gehäuse ein Strömungskanal für das strömende Fluid vorgesehen ist, der durch mindestens ein internes Führungselement aus einem für die elektromagnetischen Wellen gut durchlässigen hochhitzebeständigen Material gebildet ist.

9.   Vorrichtung nach Anspruch 8, dadurch gekennzeichnet, daß in dem Führungselement mindestens ein Filterkörper aus für die elektromagnetischen Wellen gut durchlässigem hochtemperaturfesten Material angeordnet ist.

10. Vorrichtung nach Anspruch 8, dadurch gekennzeichnet, daß als Quelle des elektromagnetischen Feldes mindestens eine Mikrowellenröhre, insbesondere mit zugeordneten Kühleinrichtungen, vorgesehen ist.

11. Vorrichtung nach Anspruch 8, dadurch gekennzeichnet, daß angrenzend an den Abgaseinlaß und den Abgasauslaß des Filterkörpergehäuses jeweils eine Lambda-Viertel-Falle vorgesehen ist, die das Austreten von Mikrowellenstrahlung an den Gehäuseenden verhindert.

12. Vorrichtung nach Anspruch 8, dadurch gekennzeichnet, daß im Inneren des Führungselementes mindestens ein Strömungsleitelement aus hochtemperaturfestem, für elektromagnetische Wellen gut durchlässigen Material angeordnet ist.

13. Vorrichtung nach Anspruch 8, dadurch gekennzeichnet, daß das Führungselement gegenüber dem Gehäuse an seinen stirnseitigen Enden mittels elastischer, hochtemperaturfester Dichtungen abgedichtet ist, die durch Federmittel unter einer Vorspannung gehalten werden, derart, daß temperaturabhängige Längenänderungen des Führungselementes durch die Federmittel elastisch aufgenommen werden.

14. Vorrichtung nach Anspruch 9 oder 10, dadurch gekennzeichnet, daß die Mikrowellenröhre über einen Hohlleiter an eine insbesondere bewegliche Antenne angekoppelt ist, über die die Mikrowellenenergie gezielt mindestens einem vorgegebenen Punkt des Filterkörpers zuführbar ist.

15. Verwendung einer Vorrichtung nach Anspruch 9 zum Regenerieren von verrußten Filterkörpern.

FIG.1

FIG.2

FIG. 3

FIG. 4

FIG.5

FIG.6

**Europäisches Patentamt**

**EUROPÄISCHER RECHERCHENBERICHT**

Nummer der Anmeldung

**EP 91 10 5677**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | EP-A-0 212 396  (BAYERISCHE MOTOREN WERKE) * Zusammenfassung * * Spalte 1, Zeile 1 - Zeile 9 * * Spalte 2, Zeile 1 - Spalte 4, Zeile 46 * * Spalte 5, Zeile 19 - Zeile 27 * * Spalte 7, Zeile 17 - Spalte 9, Zeile 4; Abbildungen 2,3 EP 91105677030 * | 1-4,6,8,9, 11,12,15, 7 | F 01 N 3/02 B 01 J 19/12 |
| | — — — | | |
| X,A | EP-A-0 327 439  (REGIE NATIONALE DES USINES RE-NAULT) * Zusammenfassung * * Spalte 1, Zeile 4 - Zeile 16 * * Spalte 1, Zeile 22 - Zeile 59 * * Spalte 2, Zeile 32 - Spalte 3, Zeile 33 * * Spalte 4, Zeile 5 - Zeile 17; Abbildungen 1,2,4 * | 1-4,6,8,9, 11,15,5, 10,13 | |
| | — — — | | |
| X,A | EP-A-0 191 437  (BAYERISCHE MOTOREN WERKE) * Zusammenfassung * * Seite 1, Absatz 1 * * Seite 2, Absatz 4 - Seite 6, Absatz 1 * * Seite 7, Absatz 4 - Seite 8, Absatz 1 * * Seite 8, Absatz 11 - Seite 11, Absatz 2 * * Seite 12, Absatz 2 -Absatz 3; Abbildungen 1-4,6 EP 91105677030 * | 1-4,6,11, 5,8-10, 12,15 | |
| | — — — | | |
| Y,A | EP-A-0 220 588  (FEV FORSCHUNGSGESELLSCHAFT FÜR ENERGIETECHNIK UND VERBRENNUNGSMOTO-REN) * Zusammenfassung * * Spalte 1, Zeile 1 - Zeile 5 * * Spalte 2, Zeile 36 - Zeile 53 * * Spalte 3, Zeile 5 - Zeile 25 * * Spalte 4, Zeile 32 - Spalte 5, Zeile 8; Ansprüche 1,17,18; Abbildun-gen 2,3 * | 7,1,15 | |
| | — — — | | RECHERCHIERTE SACHGEBIETE (Int. Cl.5) |
| A | EP-A-0 188 075  (FORD MOTOR COMPANY) * Zusammenfassung * * Seite 1, Zeile 4 - Zeile 9 * * Seite 6, Zeile 2 - Seite 7, Zeile 22 * * Seite 8, Zeile 33 - Seite 9, Zeile 11; Abbildung 1 * | 14 | F 01 N B 01 J H 05 B |
| | — — — — — | | |

Der vorliegende Recherchenbericht wurde für alle Patentansprüche erstellt

| Recherchenort | Abschlußdatum der Recherche | Prüfer |
|---|---|---|
| Den Haag | 21 August 91 | STEVNSBORG N. |